# EUROPEAN PATENT APPLICATION

(11) **EP 1 455 324 A1**
(43) Date of publication of application: **08.09.2004**
(21) Application number: 03445086.6
(22) Date of filing: 01.07.2003
(51) Int. Cl.: G09B 9/00, G09B 23/28

(54) **Simulation device for eye operations**

(30) Priority: 05.07.2002 SE 0202030
(71) Applicant: Melerit AB, 582 25 Linköping (SE)
(72) Inventor: Nordh, Leif, 582 25 Linköping (SE)
(74) Representative: Berglund, Erik Wilhelm

(57) **Abstract**

Device for the simulation of eye operations for instance of cataract including an instrument simulator (1) and that corresponds to the operation instruments. Furthermore there is a microscope simulating part (2) including two displays that are viewed by he user through lenses in a way similar to that at the microscopes that are used at operations. Said units are connected to a computer unit (3) provided with required software and furthermore a unit (4) with two foot controls is connected to the computer corresponding to the controls that at real operations are used to control microscope and instrument functions, as for instance a lengthwise vibration of a needle.

## Description

A method that is used in cataract surgery is usually to remove the lens by removing it piece by piece through a needle that is inserted between the pupil and the white of the eye. Frequently in addition to the needle also a so called core holder is used that is inserted on the opposite side of the pupil. The need for such operations is large and there is thus a demand for many correspondingly trained physicians. As realized however the work require not only a good knowledge of the structure of the eye but also a great measure of manual skill since very small erroneous movements can instead result in damages to the eye. Before a physician is allowed to operate on humans he or she has to train on animals and deceased humans respectively. The number of training opportunities before real operating is therefor never very large and the first operations executed by a physician consequently amounts to essential risks, which in turn may increase the nervousness of the physician etc.

The object of the invention is to solve the above indicated training problems, which is achieved with a simulations device for eye operations of the type where objects are inserted into the eye, and then in particular operations related to the lens of the eye.

The simulation device for eye operations in accordance with the invention includes a part simulating the operation instruments with one or two instruments, provided with sensors for the movements of the tool or tools, a computer unit with accompanying software translating the movements into a virtual image that in turn is shown on a display device.

The manipulation device includes, in order to provide an as realistic experience as possible for the practicing, for each instrument two relative each other angled pivot bearings provided with position sensors connected to the computer. The two pivot axises and the center line of each instrument cross each other in a point, that corresponds to the point on the eye where the instrument has been inserted between pupil and white of the eye.

At an operation the tools are not only displaced by pivoting but movements depthwise also take place and in order to simulate these the simulating instruments in the same way as the real ones at an operation must be possible to insert into the eye towards each other. Since the two pivot points of the instruments are only about 1cm from each other this means difficulties when it comes to the localizing of sensors for the insertion of the simulated instruments, and rotation that is also desirably if it can be simulated.

In order to sense also this movement in the depth direction and generate a realistic virtual image a sensor for the movement in the depth direction is arranged in the outer end of each instrument, for instance sensing the movement of a handle casing arranged on a bar along the center line of the instrument. By furthermore arranging a sensor for the rotation of the handle around the central bar in the outer end of this it becomes possible to register rotation of the instrument, which is not unessential since the needle often is obliquely cut for the chiseling away of the lens.

By arranging the sensors for rotating movement around the symmetry axis and displacement along this respectively in accordance with the invention in the outer end or ends of the instrument or instruments it becomes possible to arrange the two pivot points very close together.

In order to increase the realism in the simulation the display device is preferably constituted by a microscope like device with two ocular or lenses through which the practicing look at two small computer displays with images so calculated that the person using the equipment receive a three dimensional image of the eye.

In order to complete the illusion of a real operation microscope preferably a focusing as well as a zoom function and X-, Y-movement of the picture area are implemented in the program of the computer so that the practicing person by influencing the controls for zooming and focusing (foot pedals) control the picture. In this way also the microscope handling is trained.

Simultaneously with someone practicing on the simulation device the picture that he or she sees can be shown on larger displays for tuition or evaluation, that is someone who can carry out an operation, checks how the practicing person carry out the simulated operation. It is of course also possible to record the session digitally, for instance for a repeating only of the parts of the operation that failed. The invention thus not only enable training, but also evaluation of the achieved skill.

Since in the real operation case one may not exert too large forces on the eye one can consider to arrange force sensors for each sensor to monitor if the practicing person uses two much force or not. In addition to too large forces damaging the eye there is also the risk that the tendency to tremble increase if the operating person holds the instruments too tightly.

Further advantages and characteristics of the invention are apparent from the following description of an exemplary embodiment of the simulation device in accordance with the invention. In the drawings fig 1 show the simulation set up in its entirety, fig 2 a cross section of an eye when operating, fig 3 the image that the operating person sees and fig 4 - 7 a device simulating the operation instruments from different angles.

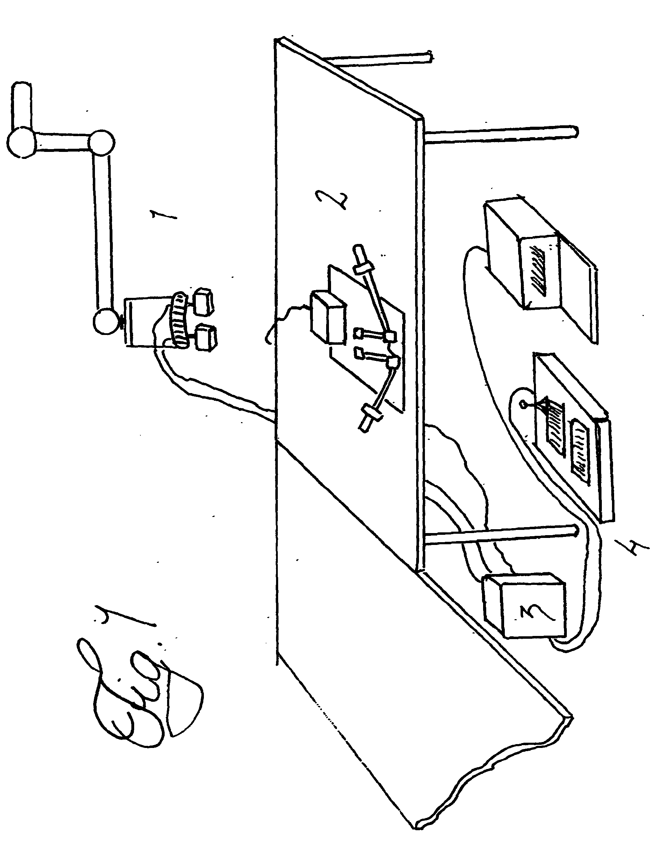

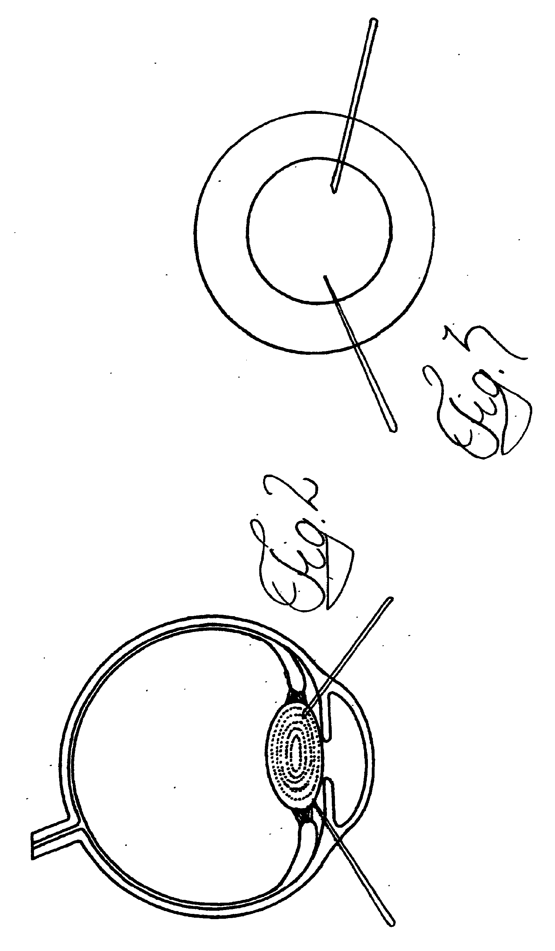

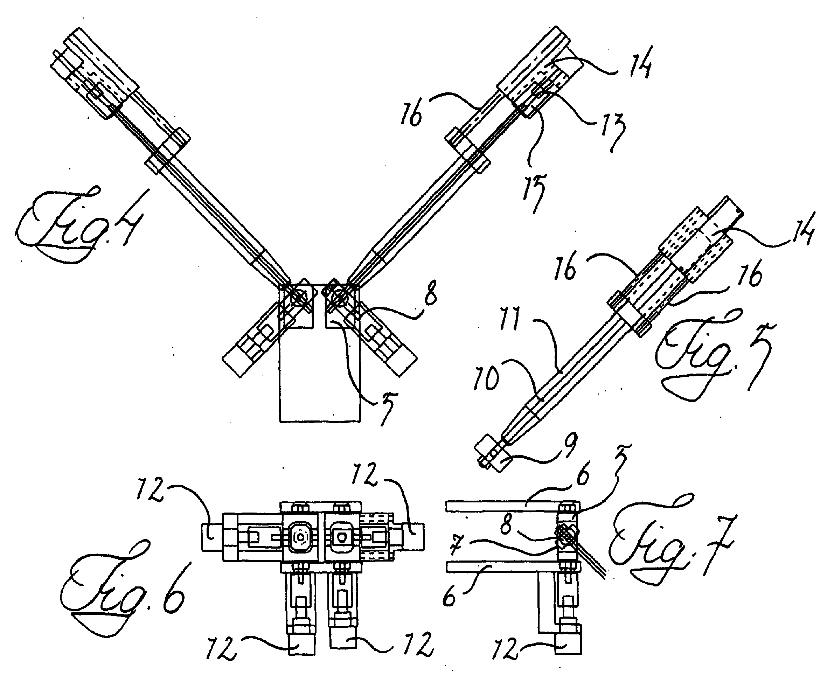

As is apparent from fig 1 the complete simulation set up for the simulation of for instance a cataract operation includes an instrument simulator which in its entirety is indicated with 1 and corresponds to the operating instruments. Furthermore there is a microscope simulating part 2 including two displays that by the user are viewed through lenses in a similar as at the microscopes that are used at operations. The two now mentioned units are connected to a computer unit 3 provided with required software and furthermore a unit 4 with two foot controls are connected to the computer corresponding to the real controls that at real operations are used to control microscope and instrument functions as for instance a lengthwise vibration of a needle.

The instrument simulating device includes two first vertical pivot bearings 5 arranged between two vertical plates 6, with a distance relative each other corresponding to the outer diameter of iris. On the moveable parts 7 of these two first pivot bearings further second pivot bearings 8 are arranged, the axises of the first and second pivot bearings of each instrument intersecting each other. Furthermore, in the pivotable part 9 of the second pivot bearings a straight cylindrical bar 10 is arranged, the center of which extending through the intersection point of the pivot bearings for each instrument. The journaling now described enables a movement forwards-backwards and laterally corresponding to the movement that the instruments can execute around the points where they have been inserted into the eye. The pivot bearings are provided with pivot position sensors 12 that are connected to the computer for influencing the generated image.

Since the two instruments in the instrument simulation device are journaled in the same way only one of these is described in the following.

On the cylindrical bar 10 a handle part 11 is arranged displaceable lengthwise and rotatably, that is the part that is to be gripped by the person who is to practice with the simulation device. In the end of the bar 10 facing away from the bearings a bearing 13 for rotation is arranged and between the bar 10 and the rotatable part 14 a sensor 15 for the rotational position is arranged. The handle part 11 is provided with two bars 16 parallel to the handle and lengthwise displaceable in the ratatable part 14 in the outer end of the bar, so that turning of the handle influence the rotation sensor 15. Between the parallel bars of the handle part 11 and the rotatable part 14 a position sensor 14 is arranged measuring the lengthwise position of the instrument.

By arrangement of the position sensors 15 and 17 for the depth position and the rotation position it becomes possible place the journaling points of the two instruments in a realistic, a real eye corresponding short distance from each other, which otherwise would not have been possible.

By means of the computer and its software the displays of the microscope simulator show two images, one for each of the eyes of the practicing person, corresponding to the same microscope viewing that is obtained at the use of a real microscope so that the instrument movements executed by the practicing person precisely and without delay can be followed in the microscope.

The foot controls connected to the computer unit may for instance include zooming and focusing of the frames of the microscope (the eye width of the user of course being adjustable as in a real microscope). Since one of the instruments normally is a needle that can suck out loosened pieces also this suction can be controlled with a foot pedal, as well as stop and start of a high frequency vibration lengthwise of the catheter giving this the function of a motor driven chisel, that in a microscopic dimension can chisel away pieces of the eye lens that then can be sucked out through the catheter. In order to improve the impression of reality sounds are emitted through a loudspeaker corresponding to those heard when the instrument vibrates.

The second instrument normally is a core holder intended to work as a holder.

With the zooming function the image of the eye can be enlarged or reduced and by means of the focusing device the focus is adjusted to achieve a clear picture and since focusing at a real operation also must be handled automatically or more or less subconscious it is important that also this is trained. This focusing may of course be achieved with a motor drive of the lenses controlling the distance between these and the image elements but advantageously one can also consider the achieving of corresponding effects by means of software, for instance by adding greater or smaller percentages of proximate pixel values in the initial frame to proximate pixels in the display frame, the initial frame being the initially clear image generated by the computer. The initial image generated in the computer is constructed partly by an eye and instrument image from the memory and also by the simulated instrument movements provided by the position sensors.

By means of the above described set up for operation simulation it is possible to train the eye operating in an enormously much larger extent that previously has been possible already before more or less real operations. At this it is also possible to vary the operation prerequisites by means of software in the computer. For instance different looks of the eyes. Furthermore it is for the practicing person possible to test different postures, different types of support, how hard the tools should be held etc in order to give each one maximum skill, something that has not previously been possible.

Advantageously the two "instruments" are journaled and sensed identically so that for both depth as well as turning can be sensed and fed to the computer. In this way the instruments may be allowed to change place, for instance if a left handed person is to train.

By storing in the computer a three dimensional image of the eye and its different parts it is possible very precisely to keep track of where the tips of the instruments are in relation to this and the computer can thus immediately "detect" if the membrane laying behind and holding the lens is injured. Such injuries and other mistakes at the operating must of course not occur at a real operation and one can thus not be content only with a simulating of operations but one can furthermore check the quality of the simulated operation. This means that the practicing person can also get a measure of how good he or she has become and if progress is made or not. Also the simulation device may be used to test which persons that are suitable to execute operations of this type.

If one should find that the instruments due to the arrangement of the sensors in the rear end becomes heavy in the rear in comparison to the instruments that is used in the real case one can consider to arrange torque motors that balance these forces.

As is apparent from the above the invention provide a far-reaching realistic simulation of the conditions at eye operations that allow on one hand extremely good training and on the other hand the possibility to evaluate skill and risk of injury to the patient for the person who is trained or tested in the simulation device. Furthermore the operation training can part for part be supervised by a man skilled in the art who can follow the operation on a larger display. Furthermore the simulated eye operations can be stored for a following evaluation and discussion respectively. In end the invention will thus result in an improved operation quality and an improvement in quantity since more persons can learn how to execute this type of operations.

## Claims

1. Device for the simulation of eye operations as for instance cataract, **characterized in that** one or two instruments are each simulated by a bar (10) that is or are journaled pivotable forwards-backwards and left-right around points corresponding to the insert points in an eye, on each bar a handle part (11) is arranged displaceable lengthwise of the bar and provided with a position sensor for this lengthwise movement in the outer end of the bar.

2. Device according to claim 1, **characterized in that** each handle part is rotatable in relation to its bar and that a rotation position sensor is arranged between the handle part and the bar in the outer end of this.

3. Device according to claim 1 or 2, **characterized in that** each bar is journaled in two pivot bearings, each provided with positions sensors, and that the axises of the pivot bearings extends through the pivot point of the bar.

4. device according to any of the preceding claims, **characterized in that** it includes a microscope simulating part with two oculars or lenses through which each a display can be viewed and that a motor driven focus function can be simulated by computer treatment of the frames for the displays.
